(19) Europäisches Patentamt
European Patent Office
Office européen des brevets

(11) **EP 1 034 092 B2**

(12) **NEUE EUROPÄISCHE PATENTSCHRIFT**

(45) Veröffentlichungstag und Bekanntmachung des Hinweises auf die Entscheidung über den Einspruch:
**12.12.2007 Patentblatt 2007/50**

(45) Hinweis auf die Patenterteilung:
**18.08.2004 Patentblatt 2004/34**

(21) Anmeldenummer: **98962266.7**

(22) Anmeldetag: **16.11.1998**

(51) Int Cl.:
***B60R 16/02*** (2006.01)

(86) Internationale Anmeldenummer:
**PCT/DE1998/003354**

(87) Internationale Veröffentlichungsnummer:
**WO 1999/028157 (10.06.1999 Gazette 1999/23)**

(54) **BORDNETZ FÜR EIN KRAFTFAHRZEUG**

ELECTRIC SYSTEM FOR A MOTOR VEHICLE

SYSTEME ELECTRIQUE POUR VEHICULE

(84) Benannte Vertragsstaaten:
**DE FR GB IT**

(30) Priorität: **27.11.1997 DE 19752661**

(43) Veröffentlichungstag der Anmeldung:
**13.09.2000 Patentblatt 2000/37**

(73) Patentinhaber: **SIEMENS AKTIENGESELLSCHAFT 80333 München (DE)**

(72) Erfinder:
• **GÖTZE, Thomas D-09113 Chemnitz (DE)**
• **JOHANNING, Hans-Peter D-97299 Zell am Main (DE)**
• **SCHÄFER, Heinz D-97230 Estenfeld (DE)**

(56) Entgegenhaltungen:
WO-A-97/08456    DE-A- 3 743 316
DE-A- 3 743 317    DE-A- 4 310 240
DE-A1- 3 812 577

EP 1 034 092 B2

**Beschreibung**

Die Erfindung bezieht sich auf ein Bordnetz für ein Kraftfahrzeug gemäß Patentanspruch 1. Derartige Bordnetze dienen insbesondere zum Anschluß von Verbrauchern an bordnetzseitige Energiespeicher, insbesondere eine Batterie, und bordnetzseitige Energieerzeuger, insbesondere einen mit der Kraftfahrzeug-Verbrennungsmaschine koppelbaren Starter-Generator; falls auch Hochstrom-Verbrauchern an das Bordnetz angeschlossen sind, ist es zur Verlustminimierung zweckmäßig, zu deren Versorgung eine zweite, gegenüber einer ersten batterieseitigen Spannung erhöhte Spannung vorzusehen.

Durch die DE 37 43 317 ist ein Fahrzeugbordnetzsystem bekannt, das seine Spannungsversorgung aus einem Starter/Generator erhält, der über Pulswechselrichter und einen 300 Volt DC-Zwischenkreis sowie einen bidirektionalen Wandler mit einem 24 Volt-Ringnetz sowie einer 24 Volt-Batterie verbunden ist, wobei weitere Verbraucher höherer Spannung als 24 Volt sowie eine Steckdose mit 220 Volt 50 Hz-Spannung aus dem Bornetzsystem versorgt werden.

In dem Dokument WO 97/08456 ist ein Starter/Generator für einen Verbrennungsmotor für ein Kraftfahrzeug offenbart, mit einem Wechselrichter zum Erzeugen der von der elektrischen Maschine benötigten Spannungen. Der Wechselrichter ist an ein Kraftfahrzeug-Bordnetz auf niedrigem Spannungsniveau (12 V)angeschlossen und setzt diese niedrige Spannung auf ein höheres Zwischenkreisniveau und in umgekehrter Richtung um. Auf dem niedrigen Spannungsniveau sind Verbraucher niedriger Spannung angeschlossen und auf dem höheren Spannungsniveau sind der Starter/Generator sowie weitere Verbraucher höherer Spannung angeschlossen.

Gemäß Aufgabe vorliegender Erfindung soll mit möglichst geringem Aufwand hinsichtlich Hardware und Software eine zweite Bordnetzspannung zur Verfügung gestellt werden. Die Lösung dieser Aufgabe gelingt erfindungsgemäß durch ein gemäß Patentanspruch 1 aufgebautes Bordnetz; vorteilhafte Ausgestaltungen der Erfindung sind jeweils Gegenstand der Unteransprüche.

Das erfindungsgemäße Bordnetz erlaubt es, mit Hilfe der Schalt- bzw. Verbindungsvorrichtung mit nur einem Hochsetzsteller sowohl einerseits einen Start-Kondensator für den Starter-Generator mit einer entsprechend hohen Spannung aufzuladen bzw. das zweite Bordnetzteil aus der Batterie zu versorgen und andererseits im Generatorbetrieb des Starter-Generators unter Verwendung des dem Starter-Generator zugeordneten Umrichters das zweite Bordnetzteil durch entsprechende Regelung des Umrichters mit einer Spannung zu versorgen, die gegenüber der Batteriespannung erhöht und gegenüber der Spannung des Starter-Generators herabgesetzt ist.

Zweckmäßigerweise wird im Generatorbetrieb der Start-Kondensator dann als Zwischenkreiskondensator eingesetzt.

Die elektrische Schalt- bzw. Verbindungsvorrichtung besteht in schaltungstechnisch besonders aufwandsarmer Weise aus einer ersten Verbindung von dem ersten Bordnetzteil zu dem dritten Bordnetzteil mit Sperrung in Gegenrichtung, weiterhin aus einer zweiten Verbindung von dem ersten Bordnetzteil zu dem zweiten Bordnetzteil mit Sperrung in Gegenrichtung und Einschaltung nur bei Speisung des zweiten Bordnetzteils aus dem ersten Bordnetzteil sowie aus einer dritten Verbindung von dem dritten Bordnetzteil zu dem zweiten Bordnetzteil mit Einschaltung nur bei Speisung des zweiten Bordnetzteils aus dem dritten Bordnetzteil vorgesehen; zweckmäßigerweise werden zur Sperrung in Gegenrichtung Dioden und zur Ein- bzw. Abschaltung der einzelnen schaltbaren Verbindungen je ein Tyristor bzw. Transistor, insbesondere IGBT, vorgesehen.

Mit geringem schaltungs- und steuerungstechnischen Zusatzaufwand kann im Generatorbetrieb des Starter-Generators auch eine Nachladung der Batterie bzw. eine Versorgung des ersten Bordnetzteils aus dem Starter-Generator dadurch erreicht werden, daß der erste Bordnetzteil über einen Tiefsetzer mit dem zweiten Bordnetzteil verbunden ist; in diesem Fall erfolgt also ein Leistungsfluß vom Starter-Generator über den Umrichter mit Zwischenkreiskondensator über die Verbindung zwischen dem dritten Bordnetzteil und dem zweiten Bordnetzteil und die anschließende Verbindung von dem zweiten Bordnetzteil über den Tiefsetzer zu dem ersten Bordnetzteil. Als Zwischenkreis-Kondensator wird dabei zweckmäßigerweise der zum Starten des Starter-Generators vorgesehene Start-Kondensator benutzt.

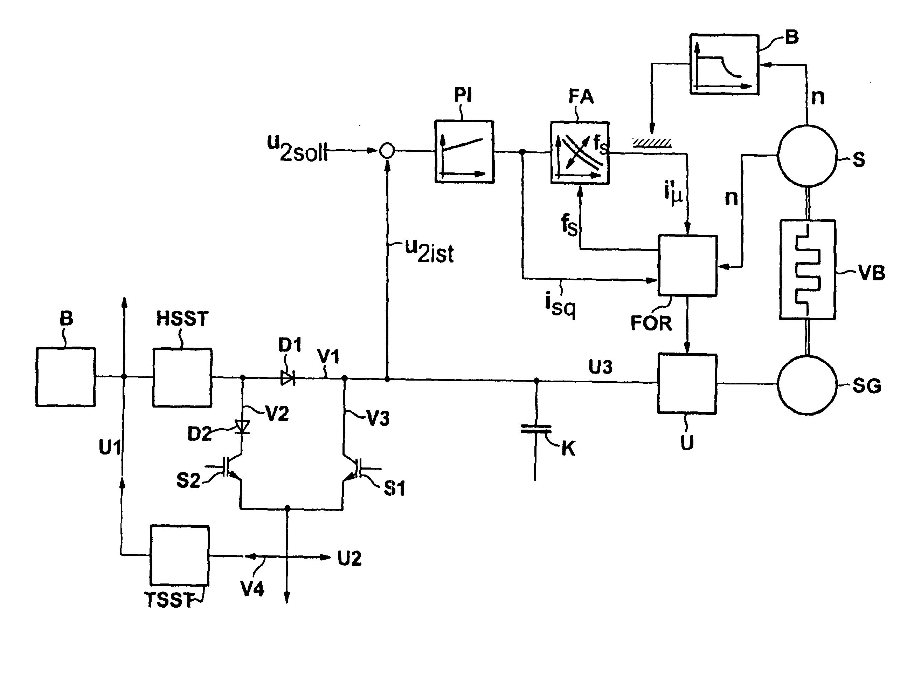

Die Erfindung sowie weitere vorteilhafte Ausgestaltungen der Erfindung werden im folgenden anhand eines in der Figur schematisch dargestellten Bordnetzes für ein Kraftfahrzeug mit einem batterieseitigen ersten Bordnetzteil, einem zweiten Bordnetzteils zur Versorgung von Verbrauchern, insbesondere Hochstrom-Verbrauchern, mit gegenüber der Battierspannung erhöhter Spannung und einem dritten Bordnetzteil mit Anschluß an einen mit dem Verbrennungsmotor des Kraftfahrzeuges koppelbaren Starter-Generator näher erläutert.

Das in der Figur dargestellte Bordnetz kann grundsätzlich aufgeteilt werden in einen ersten Bordnetzteil U1 mit einem Spannungsniveau von z.B. 12 Volt entsprechend der Spannung der Batterie B, in einen zweiten Bordnetzteil U2 zur Versorgung von Hochstrom-Verbrauchern mit einem Spannungsniveau von z.B. 180 Volt, in einen dritten Bordnetzteil U3 mit einem Spannungsniveau von z.B. 400 Volt zur Ladung eines Start-Kondensators K zum Starten eines Verbrennungsmotors VB mittels eines über einen Umrichter U speisbaren Starter-Generators SG; der dritte Bordnetzteil U3 dient im Generatorbetrieb des Starter-Generators SG weiterhin dazu, dessen Ausgangsspannung mit einem über den Umrichter U eingeregelten Spannungsniveau von ca. 180 Volt an das Spannungsniveau des zweiten Bordnetzteils U2 anzupassen. Ein Regelungsteil dient zum energieoptimalen Betrieb der als Starter-Generator SG vorgesehenen Asynchronmaschine, vorzugsweise mit Käfigläufer.

Es besteht eine elektrische Schalt- bzw. Verbindungsvorrichtung V1-V3 mit einer ersten Verbindung V1 von dem ersten Bordnetzteil U1 zu dem dritten Bordnetzteil U3 mit Sperrung in Gegenrichtung sowie mit einer zweiten Verbindung V2 von dem ersten Bordnetzteil U1 zu dem zweiten Bordnetzteil U2 mit Einschaltung nur bei Speisung des zweiten Bordnetzteils U2 aus dem ersten Bordnetzteil U1 und mit einer dritten Verbindung V3 von dem dritten Bordnetzteil U3 zu dem zweiten Bordnetzteil U2 mit Einschaltung nur bei Speisung des zweiten Bordnetzteils U2 aus dem dritten Bordnetzteil U3.

Im Zuge der Startvorbereitung des Verbrennungsmotors VB über den dann als Asynchronmotor arbeitenden Starter-Generator SG wird, z.B. nach Betätigung des Zündschlüssels, mit Hilfe eines Hochsetzstellers HSST (DC-DC-Wandler) über die Verbindung V1 ein Start-Kondensator K im dritten Bordnetzteil U3 aus der Batterie B auf eine Spannung von ca. 400 Volt aufgeladen. Schalter S1 bzw.S2 in der Verbindung V2 bzw.V3 sind während dieser Ladephase des Start-Kondensators K geöffnet. Durch eine Diode D1 in der Verbindung V1 ist diese in Gegenrichtung zur Batterie B gesperrt.

Nach dem zuvor beschriebenen Aufladevorgang des Start-Kondensators K kann der zweite Bordnetzteil U2 durch Schließen des Schalters S2 in der Verbindung V2 mittels des Hochsetzstellers HSST auf die zweite Bordnetzspannung von z.B. 180 Volt gebracht und mit Energie aus der Batterie B versorgt werden. Die Diode D1 verbleibt dabei im gesperrten Zustand, da der Start-Kondensator K im Regelfall auf einem gegenüber dem Spannungsniveau des zweiten Bordnetzteils U2 erhöhten Spannungsniveau liegt.

Beim eigentlichen Startvorgang kann der Verbrennungsmotor VB mit Hilfe des Asynchronmotors des Starter-Generators SG auf eine Drehzahl von ca. 400-700 U/min hochgefahren werden; im Falle einer elektronischen Ventilsteuerung sind die Ventile zweckmäßigerweise während des Hochfahrens voll geöffnet und damit kompressionslos gestellt. Sobald der Verbrennungsmotor VB eine vorgesehene Drehzahl bzw. den erforderlichen Drehwinkel seiner Kurbelwelle erreicht hat, kann der Verbrennungsmotor VB bei normaler Ventilstellung gezündet und der Starter-Generator SG antriebsseitig abgeschaltet werden. Falls beim Startvorgang die im Start-Kondensator K vorgespeicherte Energie nicht ausreicht, kann für den Fall, daß das Spannungsniveau des dritten Bordnetzteils U3 kleiner ist als das Spannungsniveau des zweiten Bordnetzteils U2, zusätzlich Energie aus der Batterie B über den Hochsetzsteller HSST und die Verbindung V1 für den über den Umrichter U gespeisten Starter-Generator SG bezogen werden.

Nach dem Zündvorgang des Verbrennungsmotors VB kann der Starter-Generator SG in den Generatorbetrieb übergehen. Dabei wird das Spannungsniveau des dritten Bordnetzteils U3 als Zwischenkreisspannung über den Umrichter U und den zweckmäßigerweise als Zwischenkreiskondensator benutzten Start-Kondensator K auf das Spannungsniveau des zweiten Bordnetzteils U2, von z.B. auf 180 Volt, geregelt. Nach Erreichen des Spannungsniveaus des Bordnetzteils U2 wird der Schalter S2 geöffnet und somit die Verbindung V2 unterbrochen und der Schalter S1 geschlossen und somit die Verbindung V3 vom Bordnetzteil U3 zum Bordnetzteil U2 hergestellt; der Hochsetzsteller HSST wird zweckmäßigerweise außer Betrieb gesetzt. Der Starter-Generator SG arbeitet nunmehr im Generatorbetrieb und versorgt über die geregelte Zwischenkreisspannung des Bordnetzteils U3 das Bordnetzteil U2 und die daran angeschlossenen Hochstrom-Verbraucher.

Über eine nach einer Ausgestaltung der Erfindung vorgesehene weitere vierte Verbindung V4 ist der zweite Bordnetzteil U2 über einen Tiefsetzsteller TSST (DC-DC-Wandler) mit dem ersten Bordnetzteil U1 derart verbindbar, daß im Generatorbetrieb des Starter-Generators SG die Batterie B mit einer über den Tiefsetzsteller TSST auf ihr Spannungsniveau herabgesetzten Spannung nachgeladen und die Verbraucher dieses Spannungsniveaus versorgt werden können.

Um im Generatorbetrieb des Spannungsgenerators SG mit möglichst großem Wirkunggrad und somit mit möglichst geringer Belastung der Energiespeicher bzw. Energieversorger arbeiten zu können, sind die elektrischen Verluste sowohl im Umrichter U als auch in der für den Starter-Generator SG vorgesehenen Asynchronmaschine in vorteilhafter Weise dadurch gering gehalten, daß in einer feldorientierten Regelung FOR das innere Moment $M_{i1}$ der Asynchronmaschine des Starter-Generators SG nach dem Prinzip der verlustoptimalen Steuerung bzw. Regelung des Rotorflußes durch entsprechende Adaptierung des Magnetisierungsstromes $i'_\mu$ in Abhängigkeit von einem entsprechend dem jeweils geforderten Antriebsdrehmoment ermittelten Wirkstrom $i_{sq}$ eingestellt wird.

Die feldorientierte bzw. rotorflußorientierte Vektorstromregelung einer Asynchronmaschine ist an sich, z.B. durch das Buch "Steuerverfahren für Drehstrommaschinen" von H. Späth, Springer-Verlag, 1983, bekannt.

Die feldorientierte Steuerung der Asynchronmaschine geht von der mathematischen Beschreibung des dynamischen Maschinenverhaltens mit Raumzeigergrößen aus. Feldorientierung bedeutet, daß man die frei wählbare Bezugsachse dieses mathematischen Maschinenmodells bezüglich ihrer Winkellage fest mit dem Rotorflußraumzeiger, dem Statorflußraumzeiger oder dem Luftspaltflußraumzeiger verbindet. Die mathematisch einfachste Maschinenstruktur und damit auch die einfachste Struktur einer Steuerung ergeben sich dann, wenn der Rotorflußraumzeiger als Orientierungsgröße gewählt wird. Die Struktur der Maschine gleicht dann bei Vorgabe des Ständerstromraumzeigers der einer fremderregten kompensierten Gleichstrommaschine. Die feldorientierte Steuerung der Asynchronmaschine wird dadurch erreicht, daß man die im feldorientierten Koordinatensystem dargestellten Komponenten des Statorstromzeigers der Maschine als Steuer- bzw. Regelgrößen vorgibt. Mittels einer einfachen Entkopplung werden der Betrag des Flußraumzeigers und das innere Drehmoment unabhängig voneinander steuerbar.

Das innere Drehmoment $M_{i1}$ ist dann ähnlich wie bei der Regelung einer Gleichstrommaschine bestimmt aus dem Produkt von Wirkstrom $i_{sq}$ und adaptiertem Magnetisierungsstrom $i'_\mu$

$$M_{i1} = K_1 \cdot i_{sq} \cdot i_\mu{}'$$

Die Verluste einer Asynchronmaschine können wie folgt angegegen werden:

$$P_V = P_{VCU} + P_{VFe}$$

$$P_V = \left[ R_s + R_{Fe} \cdot h \cdot \frac{f_s}{f_{sn}} + R_{Fe} \cdot (1-h) \cdot \left(\frac{f_s}{f_{sn}}\right)^2 \right] \cdot \left(i_\mu{}'\right)^2 + \left(R_s + R_R{}'\right) \cdot \left(\frac{M_{i1}}{K_1}\right)^2 \cdot \frac{1}{\left(i_\mu{}'\right)^2}$$

RS =     Statorwiderstand
$R_R$' =     Auf den Stator umgerechneter Rotorwiderstand
$R_{fe}$ =     Eisenverlustwiderstand
h =     Faktor für Hystereseverluste
l-h =     Faktor für Wirbelstromverluste
fs =     Statorfrequenz
$f_{Sn}$ =     Statornennfrequenz

Der im Sinne eines geringsten Verlustes optimale Magnetisierungsstrom ergibt sich daraus nach folgenden Beziehungen:

$$\frac{\delta P_v}{\delta i_\mu{}'} = 0$$

$$i_{\mu\;opt}{}' = \sqrt{\frac{R_S + R_R}{\sqrt[4]{R_S + R_{Fe} \cdot h \cdot \left(\frac{f_s}{f_{Sn}}\right) + R_{Fe} \cdot (1-h) \cdot \left(\frac{f_s}{f_{Sn}}\right)^2}}} \cdot \sqrt{\frac{M_{i1}}{K_1}}$$

$$i_{\mu\;opt}{}' = \sqrt{\frac{R_S + R_R}{\sqrt[2]{R_S + R_{Fe} \cdot h \cdot \left(\frac{f_s}{f_{Sn}}\right) + R_{Fe} \cdot (1-h) \cdot \left(\frac{f_s}{f_{Sn}}\right)^2}}} \cdot i_{sq}$$

Zur Definition eines für das jeweilige innere Moment $M_{il}$ maßgeblichen Wirkstrom $i_{sq}$ wird von der Differenz zwischen dem Istwertes $u_{2\;ist}$ der Zwischenkreisspannung gemäß dem Spannungsniveau des zweiten Bordnetzteiles U2 einerseits und dem Sollwert $u_{2\,soll}$ dieser Zwischenkreisspannung ausgegangen und in einem PI-Bildner der entsprechende Wirkstrom $i_{sq}$ definiert. Entsprechend dem jeweils geforderten Wirkstrom $i_{sq}$ wird gemäß den vorgenanntem Formeln nach dem Prinzip der verlustoptimalen feldorientierten Regelung unter Berücksichtigung der jeweiligen Statorfrequenz $f_S$ in einem Frequenzadapter FA der entsprechende Magnetisierungsstrom $i_\mu{}'$ bestimmt und über die felderorientierte Regelung FOR der Umrichter U bzw. die Asynchronmaschine des Starter-Generators SG angesteuert.

Nach einer weiteren Ausgestaltung der Erfindung wird der Magnetisierungsstrom $i_\mu{}'$ in vorteilhafter Weise zusätzlich in Abhängigkeit von einen Begrenzer B gestellt, derart daß der Magnetisierungsstrom bei höherer Drehzahl, insbesondere zur Verhinderung einer thermischen Überlastung bzw. im Sinne eines Feldschwächbetriebes, begrenzbar ist.

**Patentansprüche**

1.   Bordnetz für ein Kraftfahrzeug

- mit einem ersten, insbesondere aus einer Kraftfahrzeug-Batterie (B) speisbaren Bordnetzteil (U1) zur Versorgung von Verbrauchern mit einer ersten niedrigen Spannung,
- mit einem zweiten Bordnetzteil (U2) zur Versorgung von Verbrauchern mit einer zweiten höheren Spannung, und
- einem dritten Bordnetzteil (U3) für den Starter-Betrieb bzw. Generator-Betrieb eines mit einer Verbrennungsmaschine (VB) koppelbaren Starter-Generators (SG) mit einer dritten Spannung im Starter-Betrieb,
einer Schalt- bzw. Verbindungsvorrichtung (V1-V3),
- mit einer ersten Verbindung (V1) von dem ersten Bordnetzteil (U1) zu dem dritten Bordnetzteil (U3), die eine Vorrichtung zur Sperrung (D1) in Gegenrichtung aufweist, über die der erste Bordnetzteil (U1) über einen Hochsetzsteller (HSST) mit dem dritten Bordnetzteil (U3) für den Starter-Betrieb des Starter-Generators (SG) in Einspeiseverbindung bringbar ist;
- mit einer zweiten Verbindung (V2) von dem ersten Bordnetzteil (U1) zu dem zweiten Bordnetzteil (U2) mit einer Vorrichtung zum Einschalten (S2) nur bei Speisung des zweiten Bordnetzteils (U2) aus dem ersten Bordnetzteil (U1), über die der erste Bordnetzteil (U1) über einen Hochsetzsteller (HSST) mit dem zweiten Bordnetzteil (U2) in Einspeiseverbindung bringbar ist; **gekennzeichnet durch**
- eine dritte Verbindung (V3) von dem dritten Bordnetzteil (U3) zu dem zweiten Bordnetzteil (U2) mit einer Vorrichtung zum Einschalten (S1) nur bei Speisung des zweiten Bordnetzteils (U2) aus dem dritten Bordnetzteil (U3) im Generator-Betrieb, über die der dritte Bordnetzteil (U3) im Generator-Betrieb des Starter-Generators (SG) mit dem zweiten Bordnetzteil (U2) in Einspeiseverbindung bringbar ist.

2.   Bordnetz nach Anspruch 1

- mit einer Einspeisung des Starter-Generators (SG) in das erste Bordnetzteil (U1) über das zweite Bordnetzteil (U2) im Generator-Betrieb.

3.   Bordnetz nach Anspruch 2

- mit einer vierten Verbindung (V4) von dem zweiten Bordnetzteil (U2) zu dem ersten Bordnetzteil (U1) über einen Tiefsetzsteller (TSST).

4.   Bordnetz nach einem der vorhergehenden Ansprüche 1-3

- mit einem dem Starter-Generator (SG) zugeordneten Umrichter (U) als Teil des dritten Bordnetzteils (U3).

5.   Bordnetz nach einem der vorhergehenden Ansprüche 1-4

- mit einem dem Starter-Generator (SG) zugeordneten Start-Kondensator (K) als Teil des dritten Bordnetzteils (U3).

6.   Bordnetz nach einem der vorhergehenden Ansprüche 4 oder 5

- mit einer Mitbenutzung des Start-Kondensators (K) als Zwischenkreis-Kondensator des Umrichters (U) im Generator-Betrieb des Starter-Generators (SG).

**7.** Bordnetz nach zumindest einem der vorhergehenden Ansprüche

- mit einer rotorflußorientiert geregelten Asynchronmaschine als Starter-Generator (SG).

**8.** Bordnetz nach dem vorhergehenden Anspruch

- mit einer Regelung des inneren Momentes:

$$M_i \; = \; K_1 \; \cdot \; i_w \; \cdot \; i'_\mu$$

der Asynchronmaschine nach dem Prinzip der verlustoptimalen Adaptierung des Magnetisierungsstromes ($i'_\mu$) in Abhängigkeit von einem entsprechend dem jeweils geforderten Anstriebs-Drehmoment ermittelten Sollwert-Wirkstrom ($i_w$) sowie von der Statorfrequenz ($f_s$).

**9.** Bordnetz nach zumindest einem der vorhergehenden Ansprüche 7 oder 8,

- mit einem Begrenzer zur Begrenzung des Magnetisierungsstromes ($i'_\mu$) in Abhängigkeit von der Drehzahl (n) der Asynchronmaschine.

**Claims**

**1.** Onboard electrical system for a motor vehicle

- with a first onboard electrical subsystem (U1), in particular one that can be powered from a vehicle battery (B), for supplying power consuming components with a first low voltage,
- with a second onboard electrical subsystem (U2) for supplying power consuming components with a second higher voltage, and
- with a third onboard electrical subsystem (U3) for the starter mode and/or generator mode of a starter generator (SG) that can be coupled to an internal combustion engine (VB), with a third voltage in starter mode, a switching or connecting device (V1-V3),
- with a first connection (V1) from the first onboard electrical subsystem (U1) to the third onboard electrical subsystem (U3), having a device for blocking (D1) in the return direction, via which the first onboard electrical subsystem (U1) can be brought into supply connection across a step-up switching regulator (HSST) to the third onboard electrical subsystem (U3) for the starter mode of the starter-generator (SG);
- with a second connection (V2) from the first onboard electrical subsystem (U1) to the second onboard electrical subsystem (U2), with a device for enabling (S2) only during supply of power from the first onboard electrical subsystem (U1) to the second onboard electrical subsystem (U2), via which the first onboard electrical subsystem (U1) can be brought into supply connection across a step-up switching regulator (HSST) to the second onboard electrical subsystem (U2);

**characterised by**

- a third connection (V3) from the third onboard electrical subsystem (U3) to the second onboard electrical subsystem (U2), with a device for enabling (S1) only during supply of power from the third onboard electrical subsystem (U3) to the second onboard electrical subsystem (U2) in generator mode, via which the third onboard electrical subsystem (U3) can be brought into supply connection in generator mode of the starter generator (SG) to the second onboard electrical subsystem (U2.

**2.** Onboard electrical system according to claim 1,

- wherein the starter-generator (SG) supplies the first onboard electrical subsystem (U1) across the second onboard electrical subsystem (U2) in the generator mode.

**3.** Onboard electrical system according to claim 2,

- having a fourth connection (V4) from the second onboard electrical subsystem (U2) to the first onboard electrical subsystem (U1) across a step-down switching regulator (TSST).

**4.** Onboard electrical system according to one of the preceding claims 1-3,

- having a converter (U) assigned to the starter-generator (SG) as part of the third onboard electrical subsystem (U3).

**5.** Onboard electrical system according to one of the preceding claims 1 - 4,

- having a start capacitor (K) assigned to the starter-generator (SG) as part of the third onboard electrical subsystem (U3).

**6.** Onboard electrical system according to one of the preceding claims 4 or 5,

- with the start capacitor (K) also being used as an intermediate circuit capacitor of the converter (U) in generator mode of the starter-generator (SG).

**7.** Onboard electrical system according to at least one of the preceding claims,

- with a rotor-flux-oriented, regulated asynchronous motor as the starter-generator (SG).

**8.** Onboard electrical system according to the preceding claim,

- with regulation of the internal moment

$$M_1 = K_1 \cdot i_w \cdot i'_\mu$$

of the asynchronous machine according to the principle of loss-optimized adaptation of the magnetizing current ($i'_\mu$), as a function of a target value effective current ($i_w$) determined according to the respectively required drive torque and the stator frequency ($f_s$).

**9.** Onboard electrical system according to at least one of the preceding claims 7 or 8,

- having a limiter for limiting the magnetizing current ($i'_\mu$) as a function of the rotational speed (n) of the asynchronous machine.

**Revendications**

**1.** Réseau de bord pour un véhicule automobile, comprenant

- une première partie de réseau de bord (U1) pouvant être alimentée en particulier par une batterie (B) d'un véhicule automobile, destinée à alimenter des consommateurs à une première basse tension,
- une deuxième partie de réseau de bord (U2) destinée à alimenter des consommateurs à une deuxième tension plus élevée et
- une troisième partie de réseau de bord (U3) prévue pour le fonctionnement en démarreur, ou pour le fonctionnement en génératrice d'un démarreur-génératrice (SG) pouvant être accouplé à un moteur à combustion interne (VB), cette troisième partie ayant une troisième tension pour le fonctionnement en démarreur, et
- un dispositif de commutation ou de liaison (V1-V3) comprenant
- une première liaison (V1) entre la première partie de réseau de bord (U1) et la troisième partie de réseau de bord (U3) qui comprend un dispositif de blocage en sens inverse (D1) par l'intermédiaire duquel la première partie de réseau de bord (U1) peut être reliée pour l'alimentation, par l'intermédiaire d'un élévateur de tension (HSST), à la troisième partie de réseau de bord (U3) dans le fonctionnement en démarreur du démarreur-génératrice (SG) ;
- une deuxième liaison (V2) entre la première partie de réseau de bord (U1) et la deuxième partie de réseau de bord (U2) qui comprend un dispositif d'établissement de circuit (S2) seulement lorsque la deuxième partie de réseau de bord (U2) est alimentée à partir de la première partie de réseau de bord (U1), dispositif d'établissement par l'intermédiaire duquel la première partie de réseau de bord (U1) peut être reliée pour l'alimentation avec la deuxième partie de réseau de bord par l'intermédiaire d'un élévateur de tension (HSST) ;
- **caractérisé en ce qu'**il comprend également
- une troisième liaison (V3) entre la troisième partie de réseau de bord (U3) et la deuxième partie de réseau de bord (U3) qui comprend un dispositif d'établissement de circuit (S1) seulement lorsque la deuxième partie de réseau de bord (U2) est alimentée à partir de la troisième partie de réseau de bord (U3) en fonctionnement en génératrice, dispositif d'établissement par l'intermédiaire duquel la troisième partie de réseau de bord (U3) peut être reliée pour l'alimentation à la deuxième partie de réseau de bord (U2) dans le fonctionnement en génératrice du démarreur-génératrice (SG).

2. Réseau de bord selon la revendication 1, comprenant

- une alimentation du démarreur-génératrice (SG) dans la première partie de réseau de bord (U1) par l'intermédiaire de la deuxième partie de réseau de bord (U2) dans le fonctionnement en génératrice.

3. Réseau de bord selon la revendication 2, comprenant

- une quatrième liaison (V4) reliant la deuxième partie de réseau de bord (U2) à la première partie de réseau de bord (U1) par l'intermédiaire d'un abaisseur de tension (TSST).

4. Réseau de bord selon une des revendications précédentes 1-3, comprenant

- un redresseur (U) associé au démarreur-génératrice (SG) en tant que partie de la troisième partie de réseau de bord (U3).

5. Réseau de bord selon une des revendications précédentes 1-4, comprenant

- un condensateur de démarrage (K) associé au démarreur-génératrice (SG) en tant que partie de la troisième partie de réseau de bord (U3).

6. Réseau de bord selon une des revendications précédentes 4 ou 5, comprenant

- une utilisation du condensateur de démarrage (K) également en tant que condensateur de circuit intermédiaire du redresseur (U) dans le fonctionnement en génératrice du démarreur-génératrice (SG).

7. Réseau de bord selon au moins l'une des revendications précédentes, comprenant

- une machine asynchrone réglée de façon orientée sur le flux dans le rotor en qualité de démarreur-génératrice (SG).

8. Réseau de bord selon la revendication précédente, comprenant

- une régulation du couple intérieur :

$$M_{i1} = K_1 \cdot i_{sq} \cdot i'_{\mu}$$

de la machine asynchrone en application du principe de l'adaptation optimale sous le rapport des pertes du courant de magnétisation ($i'_{\mu}$) en fonction d'une valeur de consigne de courant actif ($i_w$) obtenue en fonction du couple d'entraînement demandé à chaque fois, ainsi que de la fréquence du stator ($f_s$).

9. Réseau de bord selon au moins une des revendications précédentes 7 ou 8, comprenant :

- un limiteur destiné à la limitation du courant de magnétisation ($i'_{\mu}$) en fonction de la vitesse de rotation (n) de la machine asynchrone.

**EP 1 034 092 B2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3743317
- WO 9708456 A